# EUROPÄISCHE PATENTSCHRIFT

(11) **EP 2 984 724 B1**
(45) Veröffentlichungstag und Bekanntmachung des Hinweises auf die Patenterteilung: **01.11.2017**
(21) Anmeldenummer: 13717741.6
(22) Anmeldetag: 09.04.2013
(51) Int. Cl.: H02J 3/04, H02J 3/38

(54) **VERFAHREN ZUM BETREIBEN EINES GESAMTEN ENERGIEVERSORGUNGSNETZES BEI DEZENTRALER ENERGIEERZEUGUNG**
METHOD FOR CONTROLLING AN ENERGY POWER SUPPLY NETWORK HAVING A DISTRIBUTED POWER GENERATION
PROCÉDÉ DE GESTION DE LA DISTRIBUTION DE COURANT D'UN SYSTÈME DE PRODUCTION DE COURANT DISTRIBUÉ

(43) Veröffentlichungstag der Anmeldung: 17.02.2016
(73) Patentinhaber: Siemens Aktiengesellschaft, 80333 München (DE)
(72) Erfinder: ILO, Albana, A-3021 Pressbaum (AT)
(74) Vertreter: Maier, Daniel Oliver
(86) Internationale Anmeldenummer: PCT/EP2013/057360
(87) Internationale Veröffentlichungsnummer: WO 2014/166524

(56) Entgegenhaltungen:
- EP-A2- 2 463 980
- WO-A1-2014/067557
- FREEK BAALBERGEN ET AL: "Outline of a New Hierarchical Agent-Based Voltage Instability Protection System", TRANSMISSION AND DISTRIBUTION CONFERENCE AND EXPOSITION, 2010 IEEE PES, IEEE, PISCATAWAY, NJ, USA, 19 April 2010 (2010-04-19), pages 1-8, XP031689278, ISBN: 978-1-4244-6546-0

## Beschreibung

### Technisches Gebiet

Die Erfindung betrifft allgemein das Gebiet der Energieerzeugung, Energieversorgung und des Energiemanagements. Im Speziellen bezieht sich die vorliegende Erfindung auf ein Verfahren zum Betreiben eines gesamten Energieversorgungsnetzes bei dezentraler Energieerzeugung. Dieses Energieversorgungsnetz weist dabei drei Versorgungsebenen auf, wobei in jeder Versorgungsebene Energie erzeugt und in die jeweilige Versorgungsebene eingespeist wird.

### Stand der Technik

Im Verlauf der letzten Jahre waren Energieversorgungsnetze zum Übertragen und Verteilen elektrischer Energie hinsichtlich ihres Aufbaus einem starken Wandel ausgesetzt, wobei als Energieversorgungsnetz üblicherweise ein Netzwerk von elektrischen Leitungen verstanden wird, in welchem physikalische Vorgänge durch die so genannten Kirchoff'schen Regeln beschrieben werden können. In einem klassisch aufgebauten Energieversorgungsnetz wird elektrische Energie von wenigen zentralen Großerzeugern (z.B. konventioneller Kraftwerksbetreiber, etc.) zu einer Vielzahl an Endverbrauchern bzw. Teilnehmern (z.B. Betriebe, Haushalte, etc.), von welchen Energie aus dem Energieversorgungsnetz bezogen wird, übertragen. Damit ist eine Übertragungsrichtung für die elektrische Energie im Wesentlichen - vom Großerzeuger (als Quelle) zum einzelnen Endverbraucher (als Senke) vorgegeben.

Für einen Transport der Energie sind in einem Energieversorgungsnetz üblicherweise drei Versorgungsebenen vorgesehen, welche im Prinzip Netze oder Netzebenen mit verschiedenen, festgelegten Spannungsbereichen sind. Die Versorgungsebenen werden dabei nach dem für die Übertragung von elektrischer Energie genutzten Spannungsbereich und nach der entsprechenden Verteilfunktion im Energieversorgungsnetz eingeteilt. Damit weist eine Energieversorgungsnetz üblicherweise eine Hochspannungs- oder Übertragungsebene, eine Mittelspannungs-oder Verteilungsebene und eine Niederspannungs- oder Feinverteilungsebene auf.

Bei einem Energieversorgungsnetz mit klassischem Aufbau wird von Großerzeugern (als Quelle) - wie z.B. großen Wasserkraftwerken, Wärme- oder kalorischen Kraftwerken oder großen Windparks - erzeugte elektrische Energie in der Hochspannungsebene bzw. Übertragungsebene eingespeist und dann z.B. über Leistungstransformatoren an die Verteilungs- bzw. Mittelspannungsebene weitergeleitet. Die Übertragungsebene wird dabei in einem Höchst- und Hochspannungsbereich, beispielsweise in Europa in einem Spannungsbereich von 60kV (Kilovolt) bis 380kV und höher, betrieben und von meist zentral von eine Systembetreiber gemanagt. In der Verteilungs- oder Mittelspannungsebene wird die elektrische Energie üblicherweise an regional z.B. an Transformatorstationen und/oder größere Einrichtungen (Verbraucher) wie z.B. Fabriken, Spitäler, etc. verteilt. Die Verteilungsebene wird im Regelfall über Umspannwerke aus der übergeordneten Versorgungsebene, der Übertragungs- oder Hochspannungsebene, z.B. bedarfs- oder verbrauchsorientiert mit elektrischer Energie gespeist und in einem Mittelspannungsbereich (z.B. 1 kV bis 60 kV) betrieben. Die Feinverteilung der elektrischen Energie insbesondere an die kleinen Endverbraucher wie z.B. Haushalte, kleinere Industriebetriebe, etc. erfolgt üblicherweise in der Niederspannungs- bzw. Feinverteilungsebene, wobei dort z.B. in Mitteleuropa ein Spannungsbereich zwischen ca. 230/400 Volt bis zu 1000 Volt genutzt wird. D.h. die Energie wird dann von der Verteilungsebene auf den Spannungsbereich der Feinverteilungsebene transformiert und dann die an die Feinverteilungsebene angeschlossenen Teilnehmer bzw. Endverbraucher mit Energie versorgt. Üblicherweise werden die Verteilungs- bzw. Mittelspannungsebene und die Feinverteilungs- bzw. Niederspannungsebene in einem klassisch aufgebauten Energieversorgungsnetz gemeinsam von z.B. regionalen Systembetreibern (z.B. regionale Energieversorger, regionale Netzbetreiber, etc.) bedarfsorientiert gemanagt. D.h. es wird je nach Bedarf elektrische Energie aus der übergeordneten Versorgungsebene, insbesondere der Hochspannungs- bzw. Übertragungsebene bezogen.

Ein klassisch aufgebautes Energieversorgungsnetz wie viele der heutzutage im Betrieb befindlichen Energieversorgungsnetze weisen damit eine zentrale bzw. hierarchische Struktur vor allem im Bezug auf Betrieb und Management auf. Dabei wird die benötigte Energie in der obersten Versorgungsebene - der Übertragungs- bzw. Hochspannungsebene - eingespeist und von dieser auf die darunterliegenden Versorgungsebenen - d.h. die Verteilungs- und Feinverteilungsebene - weitergeleitet. D.h. die Energie wird damit immer von der obersten Versorgungsebene und von einem oder mehreren zentralen Großerzeugern (z.B. Wasserkraftwerken, kalorischen Kraftwerken, etc.) gesteuert von z.B. einem zentralen Systembetreiber auf die darunterliegenden Versorgungsebenen und zu den daran angebundenen Verbrauchern geleitet, wobei die darunterliegenden Versorgungsebenen - d.h. Mittelspannungs- und Niederspannungsebene - gemeinsam von einem oder mehreren Systembetreiber gemanagt werden. Auf der obersten Versorgungsebene bzw. der Übertragungsebene wird üblicherweise eine automatisierte Regelung durchgeführt und das gesamte Energieversorgungsnetz ist durch den Verbrauch bzw. Bedarf auf den unteren beiden Versorgungsebenen - d.h. der Verteilungsebene und der Feinverteilungsebene gesteuert und die Energieerzeugung bzw. -einspeisung auf der obersten Versorgungsebene wird entsprechend dem - prognostizierten und/oder tatsächlichen - Energiebedarf durch die Verbraucher angepasst.

In der jüngeren Vergangenheit haben allerdings Bestrebungen zu liberalisierten Energiemärkten und eine forcierte Nutzung von so genannten erneuerbaren Energieressourcen (z.B. Wasserkraft, Windenergie, solare Strahlung, etc.) dazu geführt, dass eine Vielzahl kleinerer und dezentral im Energieversorgungsnetz verteilter Energieversorger wie z.B. kleiner Windenergieanlagen, kleine Wasserkraftwerke, Solarparks oder Photovoltaik, etc. entstanden ist. Das bewirkt, dass seit einigen Jahren von diesen dezentralen Energieerzeugern bereitgestellte elektrische Energie in das Energieversorgungsnetz auf Mittel- und/oder Niederspannungsebene eingespeist wird. Dies hat allerdings einen Umbruch der bisher üblichen Übertragungsrichtung zur Folge und eine Vielzahl an vorhandenen dezentralen Energieerzeugern stellt für Betrieb und Steuerung von Energieversorgungsnetzen eine neue Herausforderung dar - vor allem da viele der bisher für klassische Energieversorgungsnetze verwendeten zentralen Regelansätze zum Betrieb des Energieversorgungsnetzes bei Vorhandensein von dezentraler Energieerzeugung nicht mehr geeignet sind.

Während in einem klassischen Energieversorgungsnetz eine Schwierigkeit bei der Versorgung in der zeitlich schwankenden Nachfrage nach elektrischer Energie durch die Endverbraucher besteht, kommen in einem Energieversorgungsnetz mit dezentraler Energieerzeugung noch Probleme hinsichtlich des stark schwankenden Angebots elektrischer Energie durch dezentrale Energieerzeugung hinzu. So ist diese beispielsweise von dem Vorhandensein nicht kontrollierbarer Primärquellen (z.B. Wind, solare Einstrahlung, etc.) abhängig und daher deutlich weniger planbar als eine Energieerzeugung mittels konventioneller Kraftwerke. Diese direkte Abhängigkeit der dezentralen Energieerzeugung von z.B. einer aktuellen, regionalen Wetterlage kann zur Folge haben, dass eine in das Energieversorgungsnetz eingespeiste Energiemenge eine starke Fluktuation aufweist. Durch die schwankende Einspeisung werden damit starke Fluktuation in der Versorgungsebene - bei Photovoltaik z.B. der Niederspannungsebene, bei Windkraft z.B. der Niederspannungsebene und/oder der Mittelspannungsebene hervorgerufen, welche dann auch in der jeweils übergeordneten Versorgungsebene zu beobachten sind.

Technisch kann sich durch die schwankende Energieeinspeisung beispielsweise durch plötzlich überhöhte oder plötzlich einbrechende Spannungsniveaus auf zumindest Teile der jeweiligen Versorgungsebene auswirken und zu einer schwankenden Qualität der Energieversorgung führen. Wird auf einer der unteren Versorgungsebenen mehr Energie erzeugt als verbraucht, so kommt es außerdem zu einer Umkehr der Flussrichtung der Energie und es wird Energie von einer unteren Versorgungsebene auf eine höhere Versorgungsebenen zurückgespeist. Dies kann zu erheblichen Problemen bei der Betriebssicherheit und Zuverlässigkeit des Energieversorgungsnetzes führen.

Für eine vereinfachte Steuerung eines gesamten Energieversorgungsnetzes mit dezentraler Energieerzeugung, für eine Verbesserung der Zuverlässigkeit der Energieversorgung und zur leichteren Vermarktung dezentral erzeugter Energie werden z.B. die meist im Vergleich zu Großerzeugern geringen von dezentralen Energieerzeugern bereitgestellten Energiemengen einem so genannten virtuellen Kraftwerk zusammengefasst. Ein virtuelles Kraftwerk oder Virtuell Power Plant (VPP) ist dabei eine Bezeichnung für solches Zusammenfassen von mehreren kleineren, dezentralen Energieerzeugern wie z.B. Photovoltaikanlagen, kleine Windenergieanlagen, etc. Für ein virtuelles Kraftwerk kann dann beispielsweise anhand von Prognosen über einen zukünftigen versorgungsseitigen Energiebedarf eine Steuerkennlinie bzw. eine so genannter Gesamtfahrplan mit z.B. dem jeweiligen Netzbetreiber ausgehandelt werden. Somit können dann z.B. Einzelfahrpläne vorgegeben werden, nach denen die Betriebsweise der einzelnen im virtuellen Kraftwerk zusammengefassten Energieerzeuger zu regeln ist.

Für die Festlegung des Gesamtfahrplans bzw. der Einzelfahrpläne sowie für die Steuerung der dezentralen Energieerzeuger bedarf es allerdings entsprechender zentralen Steuerung und einer informationstechnischen Kopplung der dezentralen Energieerzeuger für einen entsprechenden Informationsaustausch. Von der Europäischen Union werden insbesondere für eine Standardisierung von Steuerung und Kommunikation für virtuelle Kraftwerke Projekt gefordert wie z.B. FENIX - Flexible Electricity Network to Integrate the expected ,energy evolution', DISPOWER - Distributed Generation with High Penetration of Renewable Energy Sources, etc. Dadurch soll beispielsweise eine internetbasierte Steuerung eines virtuellen Kraftwerks sowie ein automatisierter Handel von elektrischer Energie ermöglicht werden. Es ist allerdings ein großer Nachteil von virtuellen Kraftwerken, dass ihre zentrale Steuerung und die ständige informationstechnische Kopplung der dezentralen Energieerzeuger für diese Steuerung mit großem Aufwand und Kosten verbunden sind. Insbesondere muss jeder dezentrale Energieerzeuger ständig informationstechnisch an das virtuelle Kraftwerk angebunden sein, was für einen kleinen Betreiber z.B. einer privaten Photovoltaikanlage mit großen Kosten und Aufwand verbunden.

Andere Lösungen basieren auf einer dezentralen agentbasierten Architektur des Stromnetzes, wie z.B. in Baalbergen, F., & al., "Outline of a New Hierarchical Agent-Based Voltage Instability Protection System", 2010 IEEE Transmission and Distribution Conference and Exposition, 19-22 April 2010.

### Darstellung der Erfindung

Der Erfindung liegt daher die Aufgabe zugrunde, ein Verfahren zum Betreiben eines gesamten Energieversorgungsnetzes bei Nutzung dezentraler Energieerzeugung anzugeben, durch welches auf einfache Weise und ohne großen Aufwand ein Betrieb eines Energieversorgungsnetzes bei dezentraler Energieerzeugung mit hoher Stabilität unter Berücksichtigung einer vorhandenen Netztopologie ermöglicht wird, und durch welches eine Teilnahme von dezentralen Energieerzeugern an einem automatisierter Handel elektrischer Energie vereinfacht wird.
Diese Aufgabe wird ein Verfahren der eingangs angeführten Art mit den Merkmalen gemäß dem unabhängigen Patentanspruch gelöst. Vorteilhafte Ausführungsformen der vorliegenden Erfindung sind in den abhängigen Ansprüchen beschrieben. Erfindungsgemäß erfolgt die Lösung der Aufgabe mit einem Verfahren der eingangs erwähnten Art, bei welchem jede der drei Versorgungsebenen als eigenständige Regeleinheit betrachtet wird, welche über Schnittstellen zwischen den jeweiligen Regeleinheiten je nach Bedarf verbunden oder getrennt werden.

Jeder der Regeleinheiten wird ein eigener Betreiberbereich zugeordnet, wobei von jedem Betreiberbereich nur die jeweilige Regeleinheit bzw. entsprechende Versorgungsebene gesteuert wird. Das bedeutet, im jeweiligen Betreiberbereich wird einen Energieeinspeisung von Erzeuger sowie eine Energieverbrauch durch Verbraucher zusammengefasst und gesteuert. Dann wird ein Austausch von Energiemengen zwischen den Regeleinheiten durch den jeweils zugehörigen Betreiberbereich über die Schnittstelle zwischen den jeweiligen Regeleinheiten mittels Steuerung von zwischen den jeweiligen Regeleinheiten definierten Parametern kontrolliert. Der Hauptaspekt der erfindungsgemäß vorgeschlagenen Lösung besteht darin, dass das Energieversorgungsnetz in seiner Gesamtheit betrachtet wird. Die Versorgungsebenen werden - basierend auf der veröffentlichen Patentanmeldung der Anmelderin WO 2014/067557 A1 (Stand der Technik nach Artikel 54 (3) EPÜ) in der ein Verfahren zur Regelung eines Energieversorgungsnetzes beschrieben ist, - als eigenständige Regeleinheiten gesehen. Weiterhin werden die Versorgungsebenen und die jeweils an diese Versorgungsebenen angeschlossenen Energieerzeugungseinrichtungen wie z.B. Großkraftwerk in der Übertragungsebene, kleiner Wasser- oder Windkraftwerke in der Verteilungsebene oder Photovoltaikanlagen, welche z.B. über Umrichter an die Feinverteilungsebene angeschlossen sind, in einem eigenen Betreiberbereich zusammengefasst und der der jeweiligen Versorgungsebenen entsprechenden Regeleinheit zugeordnet. Damit wird jede Versorgungsebene des Energieversorgungsnetzes nicht nur als eigenständige Regeleinheit, sondern auch mit ihrer Energieerzeugung und ihrem Energiebedarf als eigenständiger Betreiberbereich betrachtet.
Das Energieversorgungsnetz stellt sich durch das erfindungsgemäße Verfahren wie ein Satz von automatisierten Versorgungsnetzen dar, welche als Glieder einer Netzkette verstanden werden können. Diese Glieder werden durch einen eigenständigen Betreiberbereich gesteuert und kontrolliert und können flexible und zuverlässige Verbindungen zueinander aufbauen, um miteinander interagieren und z.B. Energie austauschen zu können. Allen Betreiberbereichen kommen dabei die gleichen Aufgaben zu, welche darin bestehen, ein effizientes und flexibles Energiesystem zu entwickeln, zu betreiben und aufrechtzuerhalten und für Energieerzeuger einen einfachen Zugang für eine Energieeinspeisung - auf jeder Versorgungsebene - zu bieten. Insbesondere einem mittleren oder zweiten Betreiberbereich, welche einer mittleren oder zweiten Versorgungsebene zugeordnet ist, kommt eine zentrale, strategische Position zu, weil diese Versorgungsebene Schnittstellen mit den beiden anderen Versorgungsebenen aufweist und dieser Betreiberbereich daher mit den beiden anderen Betreiberbereichen interagieren muss.

Jede individuelle Versorgungsebenen bzw. der zugehörige Betreiberbereich wird unabhängig von den anderen Versorgungsebenen bzw. Betreiberbereichen betrieben, gesteuert und kontrolliert, wobei es zwischen den Betreiberbereichen beispielsweise Vereinbarungen bezüglich einer Koordination des Betriebs - insbesondere eines Energieflusses zwischen den Betreiberbereichen geben kann. Weiterhin können in jedem Betreiberbereich beispielsweise Vorgaben und/oder Vereinbarung mit angeschlossenen Energieerzeugern bzw. Energieerzeugungseinrichtungen existieren, durch welche z.B. eine Energieeinspeisung, ein Energiebedarf, einen Energieabnahme, etc. für eine Stabilität des Spannungsbereichs im jeweiligen Betreiberbereich geregelt, kontrolliert und gesteuert wird.

Durch das erfindungsgemäße Verfahren wird auf einfache Weise und ohne großen Aufwand - z.B. für Netzumbau, für große Mengen an zu verarbeitenden Daten, für zusätzliche Steuereinrichtungen, etc. - auf jeder Versorgungsebene eine Integration dezentraler Energieerzeugung ohne große Veränderungen in Struktur des Energieversorgungsnetzes sowie ein einfacher Zugang für dezentral einspeisende Energieerzeuger zu einem automatisierten Energiehandel ermöglicht. Es wird auch ein effizienter und sicherer Betrieb sowie eine flexible und dynamische Steuerung des Energieversorgungsnetzes sowie seiner Versorgungsebenen sichergestellt, da sehr einfach und effizient bei verschiedenen Ereignissen wie z.B. Überlast, zu hohe Einspeisung auf einer Versorgungsebenen, etc. in annähernd Echtzeit reagiert werden kann.

Es ist dabei vorteilhaft, wenn in jedem Betreiberbereich sowie der zugehörigen Regeleinheit ein vorgegebener Spannungsbereich eingehalten wird. Eine der wichtigsten Aufgaben für einen Betreiber bzw. innerhalb eines Betreiberbereichs im Energieversorgungsnetz ist es den jeweiligen Spannungsbereich wie z.B. Hochspannung, Mittelspannung oder Niederspannung der jeweiligen Versorgungsebene möglichst innerhalb des vorgegebenen Spannungsbereichs zu halten, um einen stabilen und sicheren Betrieb und eine entsprechende Qualität der Energieversorgung garantieren zu können. Weiterhin sind die Spannungsbereiche für die jeweiligen Versorgungsebenen beispielsweise durch verschiedene internationale und/oder nationale Standards vorgegeben. Diese Spannungsbereiche werden dann auf sehr einfache Weise für die jeweilige Regeleinheit durch den entsprechenden zugehörigen Betreiberbereich überwacht und kontrolliert, sodass eine Fluktuation in Verbrauch und/oder Einspeisung von elektrischer Energie von der jeweiligen Regeleinheit eingehalten werden.

Es ist auch günstig, wenn bei einer Regelung einer einzelnen Regeleinheit sowie des zugehörigen Betreiberbereichs eine Primärregelung, eine Sekundärregelung und eine Tertiärregelung verwendet werden. Durch das erfindungsgemäße Verfahren wird jede Versorgungsebene als eigenständige Regeleinheit und als eigenständiger Betreiberbereich betrachtet. Das bedeutet, die Steuerung, Kontrolle und Regelung des Betreiberbereichs beschränkt sich auf das jeweilige Regelelement bzw. die jeweilige Versorgungsebene. Jede Versorgungsebene des Energieversorgungsnetzes weist dabei in sich dasselbe Regelschema auf und es werden Schwankungen zwischen Einspeisung und Entnahme bzw. Verbrauch von elektrischer Energie kurzfristig im jeweiligen Betreiberbereich selbst ausgeglichen. Dazu wird die Energieentnahme - beispielsweise durch Energiespeicherung wie z.B. Aufladen von Energiespeichern, etc. - in der jeweiligen Regeleinheit erhöht oder reduziert. Kann die Schwankung in der Regeleinheit selbst nicht ausgeglichen werden, so kann z.B. durch die Steuerung des Betreiberbereichs über die jeweilige Schnittstelle Energie von einem anderen Regelelement bzw. einer darüber oder darunterliegenden Versorgungsebene bezogen werden oder z.B. bei einem Energieüberschuss an diese abgegeben werden.

Bei der Primärregelung werden insbesondere Ungleichgewichte zwischen einem Energieangebot und einer Energienachfrage innerhalb der jeweiligen Versorgungsebene bzw. bei der jeweiligen Regeleinheit vom zugehörigen Betreiberbereich ausgeglichen. D.h. es werden die jeweiligen Erzeuger der jeweiligen Versorgungsebene entsprechend geregelt. Das sind z.B. auf einer ersten Versorgungsebene bzw. Übertragungsebene die großen Energieerzeuger (z.B. große Wasserkraftwerke, Wärmekraftwerke, etc.). Auf einer zweiten Versorgungsebene bzw. Verteilungsebene werden beispielsweise als Objekt der Primärregelung die dezentralen Energieerzeuger (z.B. kleine Wasserkraftwerke, Windkraftanlagen, etc.) geregelt, von denen Energie auf dieser Ebene eingespeist wird. Bei einer dritten Versorgungsebene bzw. Niederspannungsebene werden bei der Primärregelung Kundenanlagen wie z.B. private Photovolaik-Anlagen berücksichtigt. Ziel der Primärregelung ist es üblicherweise eine stabile Netzfrequenz herzustellen.

Bei der Sekundärregelung wird auf jeder Versorgungsebene bzw. innerhalb jeder Regeleinheit vom zugehörigen Betreiberbereich danach getrachtet, das Gleichgewicht zwischen einem Energieangebot und einer Energienachfrage nach Auftreten einer Differenz in dieser Regeleinheit wiederherzustellen. Im Gegensatz zur Primärregelung wird dabei vom Betreiberbereich die Situation innerhalb der jeweiligen Regeleinheit inklusive einem Energieaustausch mit den anderen Regeleinheiten betrachtet. Dafür werden dann die Leistungsflüsse (Wirk- und Blindleistung) an den jeweiligen Schnittstellen zwischen den Regeleinheit betrachtet. Dabei wird beispielsweise durch Überwachung der Netzfrequenz darauf geachtet, dass von Primär-und Sekundärregelung immer in eine gleiche Flussrichtung gearbeitet wird.

Bei der Tertiärregelung oder so genannte Minutenreserve werden ebenfalls Energie- bzw. Stromreserven - insbesondere nach entsprechender Anforderung - im bzw. für die jeweilige Regeleinheit bereitgestellt. Dabei kann zwischen einer positiven und einer negativen Regelenergie unterschieden werden. Bei einer so genannten positiven Minutenreserve bzw. Regelenergie wird eine Unterproduktion an Energie im jeweiligen Regelelement abgefedert. Mit einer negativen Minutenreserve bzw. Regelenergie ist üblicherweise jene Kapazität gemeint, welche für ein Speichern oder Zurückhalten von Energie benötigt wird, wenn zu viel Energie und zu wenig Nachfrage in der jeweiligen Regeleinheit vorhanden ist.

Dabei ist es auch von Vorteil, wenn neben einen Austausch von Energiemengen zwischen den jeweiligen Betreiberbereichen weiterhin Betreiberdaten für eine Regelung und Steuerung der jeweiligen Regeleinheit sowie des zugehörigen Betreiberbereichs ausgetauscht werden. Diese Betreiberdaten können dabei beispielsweise technische Daten und Informationen umfassen, welche z.B. zwischen den Betreiberbereich vorab vertraglich verhandelt und vereinbart worden sind - wie z.B. auszutauschenden Energiemengen wie die Minutenreserve für die Tertiärregelung. Diese Betreiberdaten können dann beispielsweise in einer Planungsphase je Betreiberbereich für eine Abschätzung einer notwendigen Energieerzeugung durch den jeweiligen Betreiberbereich genutzt werden oder z.B. für eine Planung und/oder Regelung von Anwendungen des jeweiligen Betreiberbereichs sehr einfach genutzt werden.

In weiterer Ausgestaltung des erfindungsgemäßen Verfahrens ist es von Vorteil, wenn als Parameter zwischen den Betreiberbereichen sowie den zugehörigen Regeleinheiten Wirkleistung, Blindleistung oder der so genannte Wirkfaktor Consinus Φ herangezogen werden. Auf diese Weise wird eine Übertragung und Auswertung von Regelwerten zwischen den Regeleinheiten bzw. Versorgungsebenen für eine entsprechende Steuerung gering gehalten und die auch die Anzahl der vom Betreiberbereich auszuwertenden und zu kontrollierenden Daten und Informationen ist damit sehr einfach gestaltbar und gering. Bei einer herkömmlichen Verteilungseinrichtung in einem europäischen Energieversorgungsnetz werden beispielsweise zwischen Übertragungs- und Verteilungsebene bis zu 500 Daten- oder Regelwerte ausgetauscht, um beispielsweise die Spannung innerhalb der jeweils vorgegebenen Bereiche für die jeweilige Regeleinheit (z.B. Übertragungsebene, Verteilungsebene) zu halten. Weiterhin kann über die Steuerung dieser Parameter, insbesondere über Wirkung- und Blindleistung, eine Verbinden und/oder Trennen der jeweils eigenständigen Regeleinheit - z.B. für einen Energieaustausch - sehr einfach und rasch durchgeführt werden.

Es ist außerdem vorteilhaft, wenn als erste der drei Versorgungsebenen eine Hochspannungs- oder Übertragungsebene vorgesehen wird. Als zweite der drei Versorgungsebenen kann eine Mittelspannungs- oder Verteilungsebene und als dritte der drei Versorgungsebene eine Niederspannungs- oder Feinverteilungsebene vorgesehen werden. Diese Versorgungsebenen sind üblicherweise in Energieversorgungsnetzen vorgesehen und werden durch das erfindungsgemäße Verfahren idealer Weise nicht nur eigenständige Regeleinheiten, sondern auch als eigenständig gesteuerte Betreiberbereich betrachtet. Jede Versorgungsebene wird dabei von den anderen Versorgungsebenen als so genannte "Black Box" gesehen. Eine Interaktion der jeweiligen Versorgungsebenen erfolgt sehr einfach über die jeweilige Schnittstelle durch entsprechende Steuerung der Wirk- und Bildleistung, wobei die Wirk- und Blindleistung in beide Richtungen übertragen werden kann. Für ein entsprechendes Zusammenspiel der zu den jeweiligen Versorgungsebenen gehörenden Betreiberbereichen kann weiterhin eine auf Basis von vertraglichen Vereinbarungen eine Koordination des jeweiligen Betriebs auf einer technischen und/oder wirtschaftlichen Ebene festgelegt werden. Auf diese Weise können Regelungen zwischen der Hochspannungsebene bzw. dem entsprechenden Betriebsbereich der Hochspannungsebene und dem Betriebsbereich der Mittelspannungsebene sowie zwischen dem Betriebsbereich der Mittelspannungsebene und dem Betriebsbereich der Niederspannungsebene festgelegt werden. Dabei kommt insbesondere dem Betriebsbereich der Mittelspannungsebene eine besondere Funktion und strategische Position zu, da diese eine Koordination und auch vertragliche Regelungen mit den beiden weiteren Versorgungsebenen aufweist. Damit hat insbesondere der Betreiberbereich der Mittelspannungsebene die Möglichkeit, eine dynamische Systemkontrolle des gesamten Energieversorgungsnetzes maßgeblich zu beeinflussen.

Es ist weiterhin zweckmäßig, wenn in der zweiten und dritten Versorgungsebene vom jeweils zugehörigen Betreiberbereich Schnittstellen zu Teilnehmern oder Gruppen von Teilnehmern gesteuert werden, über welche von den Teilnehmern oder Gruppen von Teilnehmern Energie entnommen und von zumindest einem Teil der Teilnehmer oder Gruppen von Teilnehmern direkt Energie, insbesondere mittels Photovoltaik und/oder Windkraft, in den jeweiligen Betreiberbereich eingespeist wird. Auf diese Weise kann allen Teilnehmer und insbesondere den kleineren und kleinen Energieerzeugern sowie so genannten Prosumenten, welche an ein jeweiliges Netz auf der jeweiligen zweiten und/oder dritten Versorgungsebene angeschlossen sind, sehr einfach ein Zugang zu einem Energiemarkt und Energiehandel erleichtert werden. Der Begriff Prosument ist eine Kombination aus den Wörtern "Produzent" und "Konsument" und bezeichnet einen Verbraucher bzw. Teilnehmer am Energieversorgungsnetz, welcher gleichzeitig auch Produzent von Energie ist - wie z.B. ein privater Haushalt, in welchem eine Photovoltaikanlage betrieben wird, und von welchem damit gelegentlich oder laufend mehr Energie produziert wird als von ihm verbraucht wird.

Durch das erfindungsgemäße Verfahren soll sichergestellt werden, dass von allen Energieerzeugern - unabhängig von ihrer Größe und Position im Energieversorgungsnetz - eine von ihnen erzeugte Energiemenge in das Energieversorgungsnetz eingespeist und für einen Energiehandel zur Verfügung gestellt werden kann. Dabei können beispielsweise auf der jeweiligen Versorgungsebene bzw. im jeweiligen Betreiberbereich auch mehrere kleinere Energieerzeuger zu Gruppen wie z.B. zu einem virtuellen Kraftwerk zusammengefasst werden, welches dann von der jeweiligen Betreiberebene ausgesteuert wird. Diese ist beispielsweise besonders günstig, wenn Energieerzeuger gleichen Typs (z.B. mehrere Photovoltaikanlagen, mehrere kleinere Windenergieerzeuger, etc.) zu einer Gruppe oder einem virtuellen Kraftwerk zusammengefasst werden, da von diesen ähnliche bzw. die gleichen Charakteristika, Parameter und Steuerdaten aufgewiesen werden. Weiterhin weist eine Zusammenfassung von mehreren kleineren Energieerzeugern und eine Aussteuerung über Schnittstellen durch den jeweiligen Betreiberbereich beispielsweise den Vorteil auf, dass Fluktuationen in der Energieeinspeisung durch die einzelner Energieerzeuger (z.B. durch Windschwankungen oder Schwankungen in der Sonneneinstrahlung) im jeweiligen Regelelement bzw. auf der jeweiligen Versorgungsebenen besser und einfacher ausgeglichen werden können. Es kann über die Schnittstelle dann eine vergleichsweise größere Energiemenge gesteuert werden, als bei einer Ansteuerung einzelner Teilnehmer bzw. Energieerzeuger.

### Kurzbeschreibung der Zeichnung

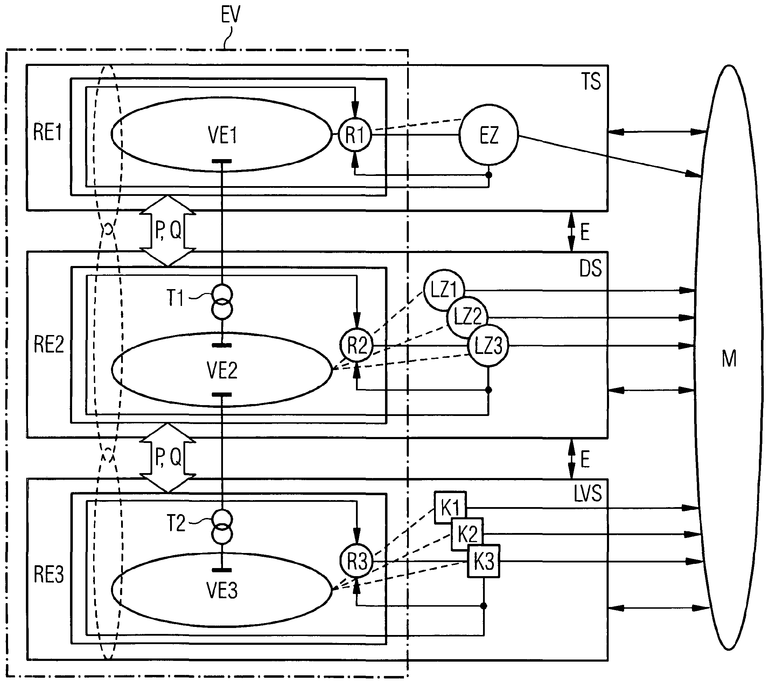

Die Erfindung wird nachfolgend in beispielhafter Weise anhand der beigefügten Figur erläutert. Es zeigt Figur 1 schematisch ein beispielhaftes Energieversorgungsnetz, in welchem das erfindungsgemäße Verfahren zum Betreiben eines gesamten Energieversorgungsnetzes bei dezentraler Energieerzeugung zur Anwendung kommt.

### Ausführung der Erfindung

Figur 1 zeigt in schematischer Weise ein beispielhaftes Energieversorgungsnetz EV. Das Energieversorgungsnetz EV weist drei Versorgungsebenen VE1, VE2, VE3 auf. Dabei ist als oberste oder erste Versorgungsebene VE1 eine Hochspannungs-oder Übertragungsebene vorgesehen. Eine zweite oder mittlere Versorgungsebene VE2 ist dabei als Mittelspannungs- oder Verteilungsebene ausgeführt und als dritte oder unterste Versorgungsebene ist einen Niederspannungs- oder Feinverteilungsebene vorgesehen.

Auf jeder dieser drei Versorgungsebenen VE1, VE2, VE3 wird über jeweilige beispielhafte Energieerzeuger EZ, LZ1, LZ2, LZ3, K1, K2, K3 Energie in der jeweiligen Versorgungsebene VE1, VE2, VE3 in das Energieversorgungsnetz EV dezentral eingespeist. Auf der ersten Versorgungsebene bzw. der Übertragungsebene VE1 wird von großen Energieerzeugern EZ wie z.B. großen Wasserkraftwerken, Wärme- oder kalorischen Kraftwerken oder großen Windparks erzeugte Energie in das Energieversorgungsnetz eingespeist. An die zweite Versorgungsebene bzw. die Verteilungsebene VE2 können als Teilnehmer LZ1, LZ2, LZ3 neben größeren Verbrauchern (z.B. Fabriken, Spitäler, etc.) auch regionale oder lokale Energieerzeuger LZ1, LZ2, LZ3 wie z.B. kleiner Wasserkraftwerke, Windparks, etc. angeschlossen sein. Von diesen regionalen oder lokalen Energieerzeugern LZ1, LZ2, LZ3 wird dann dezentral erzeugte Energie ins das Energieversorgungsnetz eingespeist. Auf der untersten Versorgungsebene oder der Feinverteilungsebene VE3 sind als Teilnehmer K1, K2, K3 üblicherweise private Haushalte, kleinere Industriebetriebe, etc. als Verbraucher an das Energieversorgungsnetz EV angeschlossen. Von zumindest eine Teil dieser Teilnehmer K1, K2, K3 kann als so genannte Prosumenten wieder Energie in das Energieversorgungsnetz EV eingespeist werden. Von diese Teilnehmer K1, K2, K3, welche an der dritten Versorgungsebene VE3 bzw. an Feinverteilungsnetze/Ortsnetze angeschlossen sind, kann beispielsweise mittels PhotovoltaikAnlagen, kleine Windenergieanlagen, etc. Energie erzeugt und zurückgespeist werden.

Weiterhin weist jede Versorgungsebene VE1, VE2, VE3 einen vorgegebenen Spannungsbereich aufweisen, welcher trotz dezentraler Energieeinspeisung und einer Fluktuation von Energiebedarf und Energieproduktion eingehalten werden soll. Die erste Versorgungsebene VE1 weist dabei z.B. in einem Höchst-und Hochspannungsbereich (z.B. 60kV bis 380kV und gegebenenfalls auch höher) auf. In der zweiten Verteilungsebene VE2 kann z.B. ein Mittelspannungsbereich (z.B. 1 kV bis 60 kV) eingehalten werden. Für eine Feinverteilung der Energie kann dann in der dritten Versorgungsebene VE3 ein Niederspannungsbereich beispielsweise zwischen ca. 230/400 Volt verwendet werden. Für eine spannungsmäßige Umformung der Energie zwischen den Versorgungsebenen VE1, VE2, VE3 sind daher entsprechende Transformationsstationen T1, T2 vorgesehen. Die zweite Versorgungsebene VE2 weist dazu beispielsweise eine erste Transformationsstation T1 (z.B. Umspannwerk, etc.) auf. Auf der dritten Versorgungsebene VE3 ist dazu eine zweite Transformationsstation T2 (z.B. Transformator, etc.) vorgesehen.

Bei der Anwendung des erfindungsgemäßen Verfahrens wird jede der drei Versorgungsebene VE1, VE2, VE3 als eigenständige Regeleinheit RE1, RE2, RE3 betrachtet. Diese Regeleinheiten RE1, RE2, RE3 werden unabhängig voneinander geregelt. Die Regeleinheiten RE1, RE2, RE3 können über Schnittstellen zwischen den jeweiligen Regeleinheiten RE1, RE2, RE3 je nach Bedarf getrennt oder verbunden werden. Diese Schnittstellen werden durch eine Steuerung einer zwischen den jeweiligen Regeleinheiten RE1, RE2, RE3 übertragenen Wirk- und Blindleistung P, Q definiert. Bei dem beispielhaft dargestellten Energieversorgungsnetz EV wird daher eine Schnittstelle durch Steuerung der Wirkleistung P und der Blindleistung Q zwischen der ersten und der zweiten Regeleinheit RE1, RE2 - und damit zwischen der Übertragungsebene VE1 und der Verteilungsebene VE2 - definiert. Weiterhin wird eine Schnittstelle über die Steuerung von Wirkleistung P und Blindleistung Q zwischen der zweiten und dritten Regeleinheit RE2, RE3 bzw. der Verteilungsebene VE2 und der Feinverteilungsebene VE3 gebildet. Als Folge können die Versorgungsebenen VE1, VE2, VE3 bzw. die Regeleinheiten RE1, RE2, RE3 wie Glieder einer Kette durch die Steuerung der Wirkleistung P und der Blindleistung Q an den jeweiligen Schnittstellen flexibel interagieren, wobei die zweiten Regeleinheit RE2 bzw. der Verteilungsebene VE2 aufgrund ihrer Position - sie weist Schnittstellen mit den beiden anderen Versorgungsebenen VE1, VE2 auf - als zentrales, strategisches Kettenglied gesehen werden kann. Die jeweilige Regeleinheit RE1, RE2, RE3 stellt für die anderen Regeleinheiten RE1, RE2, RE3 dabei eine so genannte "Black Box" dar und es werden über die Schnittstelle zwischen den Regeleinheiten RE1, RE2, RE3 nur sehr wenige Daten bzw. Regelwerte ausgetauscht. So wird z.B. zwischen der ersten Regeleinheit RE1 bzw. der Übertragungsebene VE1 und der zweiten Regeleinheit RE2 bzw. der Verteilungsebene VE2 z.B. für ein Einhalten von jeweils für die Versorgungsebene VE1, VE2 vorgegebenen Spannungsbereiche nur Werte für die Wirkleistung P und/oder die Blindleistung Q und/oder ein Wert für den so genannten Wirkfaktor cosΦ ausgetauscht.

Durch das erfindungsgemäße Verfahren wird jede der drei Versorgungsebenen VE1, VE2, VE3 bzw. den zugehörigen Regeleinheiten RE1, RE2, RE3 eine eigener Betreiberbereich TS, DS, LVS zugeordnet. Von dem jeweiligen Betreiberbereich TS, DS, LVS werden dabei die jeweilige Regeleinheit RE1, RE2, RE3 sowie an die entsprechende zugehörige Versorgungsebene VE1, VE2, VE3 umfasst und unabhängig betrieben. Durch den jeweiligen Betreiberbereich wird ein Energieverbrauch sowie eine Energieeinspeisung der jeweiligen Regeleinheit RE1, RE2, RE3 zusammengefasst und gesteuert. D.h. ein erster Betreiberbereich TS besteht z.B. aus der ersten Regeleinheit RE1 und den an die erste Versorgungsebene VE1 angeschlossenen Energieerzeugern EZ (z.B. große Wasserkraftwerke, kalorische Kraftwerke, etc.) und kontrolliert dabei die Energieerzeugung bzw. - einspeisung auf der ersten Versorgungsebene. Ein zweiter Betreiberbereich DS umfasst beispielsweise die zweiten Versorgungsebene VE2 bzw. das zweite Regelelement RE2 sowie die Energieerzeuger LZ1, LZ2, LZ3 wie z.B. lokale oder regionale Energieerzeuger (z.B. kleine Wasserkraftwerke, Windenergieanlagen, etc.) und an die zweite Versorgungsebene VE2 angeschlossene Verbraucher wie z.B. Industriebetriebe, Spitäler, etc. Vom zweiten Betreiberbereich DS werden dabei der Energieverbrauch und die Energieeinspeisung in die zweite Regeleinheit RE2 zusammengefasst und gesteuert. Ein dritter Betreiberbereich besteht aus der dritten Versorgungsebene VE3 und den Teilnehmern K1, K2, K3, welche an diese Versorgungsebene VE3 bzw. dieses Regelelement RE3 angeschlossen sind. Diese Teilnehmer K1, K2, K3 sind Verbraucher wie z.B. private Haushalte, kleiner Betriebe, etc. und können zumindest zum Teil auch Energieproduzenten sein wie z.B. private Haushalte, von welchen Photovoltaikanlagen betrieben werden, oder kleinere Betriebe mit z.B. Photovoltaik- oder Windenergieanlagen, etc. Von diesen so genannten Prosumenten K1, K2, K3 wird nicht nur Energie aus dem Energieversorgungsnetz EV bezogen, sondern auch Energie mit teilweise z.B. wetterabhängiger Fluktuation zurückgespeist. Vom dritten Betreiberbereich LVS wird damit der Energieverbrauch und die Energieerzeugung der dritten Regeleinheit RE3 zusammengefasst, kontrolliert und gesteuert.

Weiterhin wird von den Betreiberbereichen TS, DS, LVS ein Austausch von Energiemengen E zwischen den jeweiligen Regeleinheiten RE1, RE2, RE3 über die entsprechenden Schnittstellen zwischen den Regeleinheiten RE1, RE2, RE3 mittels der Steuerung von zwischen den Regeleinheiten RE1, RE2, RE3 definierten Parameter - insbesondere der Wirkleistung P, der Blindleistung Q oder des Wirkfaktors cosΦ kontrolliert und gesteuert. Durch die Steuerung dieser definierten Parameter können die Regeleinheiten RE1, RE2, RE3 wie Glieder einer Netzkette den jeweiligen Schnittstellen flexibel interagieren und damit bei Bedarf die Regeleinheiten RE1, RE2, RE3 für einen Energieaustausch E zwischen den Betreiberbereichen TS, DS, LVS verbunden oder getrennt werden, wenn ein derartiger Energieaustausch E nicht notwendig ist. D.h. von jeder Regeleinheit RE1, RE2, RE3 wird die jeweils benötigte Energie selbst produziert, es werden auch keine Überschüsse erzeugt und damit der jeweils vorgegebene Spannungsbereich für die Regeleinheit RE1, RE2, RE3 bzw. den zugehörigen Betreiberbereich TS, DS, LVS eingehalten.

Dabei weist jede Regeleinheit RE1, RE2, RE3 dasselbe Regelschema R1, R2, R3 auf und jeder Betreiberbereich dieselbe Aufgabe, die entsprechende Regeleinheit RE1, RE2, RE3 effizient und stabil zu betreiben und für die jeweiligen Energieerzeuger EZ, LZ1, LZ2, LZ3, K1, K2, K3 eine einfachen Zugang für die Energieeinspeisung sowie zu einem Energiemarkt M zu bieten. Für die entsprechende Regelung der jeweiligen Regeleinheit RE1, RE2, RE3 werden im jeweiligen Betreiberbereich TS, DS, LVS eine so genannte Primärregelung, eine so genannte Sekundärregelung und eine so genannte Tertiärregelung verwendet. Für die jeweilige Versorgungsebene VE1, VE2, VE3 ergeben sich damit unterschiedliche Objekte für die Regelung R1, R2, R3 sowie unterschiedliche Objekte der Energieerzeugung vom jeweiligen Betreiberbereich TS, DS, LVS gesteuert und kontrolliert werden muss.

Weiterhin können neben dem Austausch von Energiemengen E zwischen den jeweiligen Betreiberbereichen TS, DS, LVS - d.h. beispielweise zwischen dem ersten Betreiberbereich TS und dem zweiten Betreiberbereich DS und zwischen dem zweiten Betreiberbereich DS und dem dritten Betreiberbereich LVS - für die Regelung und Steuerung der jeweiligen Regeleinheit RE1, RE2, RE3 Betreiberdaten und Informationen ausgetauscht werden. Diese Betreiberdaten und/oder deren Inhalt können z.B. zwischen den Betreiberbereichen TS, DS, LVS vertraglich vereinbart werden und z.B. vorab in einer Planungsphase oder während einer Planungsphase ausgetauscht werden. Derartige Betreiberdaten sind z.B. Energiemengenreserven für die Tertiärregelung - so genannte Minutenreserve, etc., welche von einem Betreiberbereich TS, DS, LVS im Bedarf einem andere zur Verfügung gestellt wird. Es können mittels Betreiberdaten auch automatisiert Informationen über z.B. Planungsdaten, Verbrauchsabschätzungen, etc. ausgetauscht werden.

In der ersten Versorgungsebene VE1 werden vom ersten Betreiberbereich TS insbesondere die großen Energieerzeuger EZ gesteuert und die erste Regeleinheit RE1 kontrolliert und gemanagt. Auf der zweiten Versorgungsebene VE2 werden vom zweiten Betreiberbereich DS insbesondere bei der Primärregelung vor allem die dezentralen (regionalen und/oder lokalen) Energieerzeuger LZ1, LZ2, LZ3 gesteuert und kontrolliert. In der dritten Versorgungsebene VE3 wird Energie beispielsweise von privaten Erzeugern K1, K2, K3 erzeugt und eingespeist. Daher müssen vom dritten Betreiberbereich LVS insbesondere diese Teilnehmer bzw. Kundenanlagen K1, K2, K3 (z.B. Photovoltaik, etc.) auf der dritten Versorgungsebene VE3 entsprechend kontrolliert und gesteuert werden müssen, um z.B. eine Fluktuation in der Einspeisung auszugleichen. Für ein verbessertes Management durch den Betreiberbereich DS, LVS können beispielsweise in der zweiten und dritten Versorgungsebene VE2, VE3 vom jeweiligen Betreiberbereich DS, LVS Schnittstellen zu den Teilnehmern bzw. Energieerzeugern LZ1, LZ2, LZ3, K1, K2, K3 bzw. zu Gruppen von Teilnehmern bzw. Energieerzeugern LZ1, LZ2, LZ3, K1, K2, K3 gesteuert werden, über welche Energie bezogen und vor allem in die Versorgungsebene VE2, VE3 eingespeist wird.

Durch das erfindungsgemäße Verfahren kann je nach Bedarf - beispielsweise wenn in einem Betreiberbereich ein Energiedefizit (d.h. der Verbrauch ist größer als die Produktion) oder ein Energieüberschuss (d.h. die Produktion ist größer als der Verbrauch) besteht - zwischen den Betreiberbereichen TS, DS, LVS für die Regelung der zugehörigen Regeleinheit RE1, RE2, RE3 Energie E ausgetauscht werden - z.B. auf Basis von Vereinbarungen zwischen den Betreiberbereichen TS, DS, LVS. Vo jeweiligen Betreiberbereich TS, DS, LVS kann dann beispielsweise ein Bedarf über den Energiemarkt M gedeckt werden oder am Energiemarkt M zur Verfügung gestellt werden. Dabei kann z.B. vom ersten Betreiberbereich TS eine Vereinbarung mit dem zweiten Betreiberbereich DS eingegangen werden. Der zweite Betreiberbereich DS kann über eine entsprechende Vereinbarung und Festlegung eines Energieaustausches E mit dem dritten Betreiberbereich LVS verfügen. Dem zweiten Betreiberbereich DS kommt damit eine strategische Position zu, da durch ihn einen Energieaustausch E mit dem ersten wie mit dem dritten Betreiberbereich TS, LVS beeinflusst werden kann.

Weiterhin besteht die Möglichkeit - insbesondere aufgrund der von den Betreiberbereichen DS, LVS gesteuerten Schnittstellen mit den jeweiligen Energieerzeugern LZ1, LZ2, LZ3, K1, K2, K3, dass die Energieerzeuger auch direkt die produzierte Energie am Energiemarkt M zur Verfügung stellen. Zur Einfachung und für eine bessere Steuerung können dabei die Energieerzeuger LZ1, LZ2, LZ3, K1, K2, K3 der zweiten und/oder dritten Versorgungsebene VE2, VE3 zu Gruppen bzw. zu so genannten virtuellen Kraftwerken zusammengefasst werden. Damit ist es für den jeweiligen Betreiberbereich DS, LVS einfacher Fluktuationen in der Energieproduktion und -einspeisung zu kontrollieren und zu regeln.

Für eine Regelung des Energieaustausch E zwischen den Betreiberbereichen TS, DS, LVS und einen sicheren und stabilen Betrieb des Energieversorgungsnetzes EV können über die Steuerung der Parameter - insbesondere Wirkleistung P und Blindleistung Q, durch welche die Schnittstellen zwischen den Regeleinheiten RE1, RE2, RE3 definiert werden, sehr einfach so genannte Micro-Grids oder Inselnetz kreiert bzw. wieder in das Energieversorgungsnetz EV eingebunden werden. Damit wird z.B. eine Energieerzeugung in einem Betreiberbereich TS, DS, LVS den anderen Betreiberbereichen TS, DS, LVS zur Verfügung gestellt oder nicht. So kann z.B. die zweite Regeleinheit RE2 bzw. die zweite Versorgungsebene VE2 gemeinsam mit der dritten Regeleinheit RE3 von der ersten Regeleinheit RE1 bzw. der Übertragungsebene VE1 (vorübergehend) abgekoppelt werden, weil z.B. von den regionalen bzw. lokalen Erzeuger LZ1, LZ2, LZ3 und/oder den Prosumenten K1, K2, K3 der dritten Versorgungsebene genügend Energie produziert wird, um eine Bedarf der zweiten und dritten Versorgungsebene VE2, VE3 zu decken.

Reicht allerdings beispielsweise die Energieerzeugung der zweiten und dritten Versorgungsebene VE2, VE3 nicht mehr für die Abdeckung des Energiebedarfs aus, so kann die zweite Regeleinheit RE2 über eine entsprechend Steuerung bzw. Anforderung des zweiten Betreiberbereichs DS wieder an die erste Regeleinheit RE1 für einen Energieaustausch E zwischen den Betreiberebenen TS, DS angebunden werden.

Für die Abkopplung wird z.B. eine Übertragung der Wirkleistung P und der Blindleistung Q über die Schnittstelle zwischen der ersten und der zweiten Regeleinheit RE1, RE2 bis auf Null abgesenkt. Die erste und zweite Versorgungsebenen VE1, VE2 sind dann immer noch synchronisiert, aber es wird keine Leistung P, Q mehr zwischen ihnen übertragen bzw. es findet kein Energieaustausch E zwischen den Betreiberbereichen TS, DS mehr statt. Nachdem dann die entsprechende erste Transformationsstation T1 abgeschaltet worden ist, sind die beiden Versorgungsebenen VE1, VE2 bzw. die beiden Regeleinheiten RE1, RE2 voneinander getrennt. Die zweite Regeleinheit wird dann als Micro-Grid oder Inselnetz betrieben.

Für ein Wiederanbinden der zweiten Regeleinheit RE2 an die erste Regeleinheit RE1 bzw. an die Übertragungsebene VE1, z.B. weil vom zweiten Betreiberbereich DS festgestellt wird, dass der Energiebedarf nicht mehr lokal/regional gedeckt werden kann, wird zuerst eine Synchronisierung zwischen der ersten Regeleinheit RE1 und der anzubindenden zweiten Regeleinheit RE2 durchgeführt. Dann wird die zu übertragene Wirkleistung P und Blindleistung Q zwischen den Regeleinheiten RE1, RE2 gesteigert, sodass wieder Leistung P, Q zwischen den Regeleinheiten RE1, RE2 und Energie E zwischen den Betreiberbereichen TS, DS ausgetauscht werden kann.

Durch das erfindungsgemäße Verfahren wird ein Energieversorgungsnetz EV als ein Art Energieversorgungsnetzkette dargestellt, bei welche die einzelnen Regeleinheiten RE1, RE2, RE3 bzw. Kettenglieder einfach und flexibel miteinander interagieren können und die Interaktion und der Energieaustausch sowie das Management der Regeleinheiten RE1, RE2, RE3 durch den entsprechende zugehörige Betreiberbereich TS, DS, LVS gesteuert, kontrolliert und z.B. auf Basis vertraglicher und technischer Vereinbarungen koordiniert wird. Dadurch können ohne großen Aufwand dezentrale Energieerzeuger LZ1, LZ2, LZ3, K1, K2, K3 sehr einfach in bestehendes Energieversorgungsnetz EV integriert werden und sehr einfach die produzierte Energie für einen automatisierten Handel auf einem Energiemarkt M zur Verfügung stellen.

## Patentansprüche

1. Verfahren zum Betreiben eines gesamten Energieversorgungsnetzes (EV), wobei das Energieversorgungsnetz (VE) drei Versorgungsebenen (VE1, VE2, VE3) aufweist, wobei in jeder Versorgungsebene (VE1, VE2, VE3) von Produzenten (EZ, LZ1, LZ2, LZ3, K1, K2, K3) Energie erzeugt und eingespeist wird, und wobei jede der drei Versorgungsebenen (VE1, VE2, VE3) als eigenständige Regeleinheit (RE1, RE2, RE3) betrachtet wird, welche über Schnittstellen zwischen den jeweiligen Regeleinheiten (RE1, RE2, RE3) je nach Bedarf verbunden oder getrennt werden, **dadurch gekennzeichnet, dass** jeder der Regeleinheiten (RE1, RE2, RE3) ein eigener Betreiberbereich (TS, DS, LVS) zugeordnet wird, wobei im jeweiligen Betreiberbereich (TS, DS, LVS) eine Energieeinspeisung von Erzeugern sowie ein Energieverbrauch durch Verbraucher der jeweiligen Versorgungsebene (VE1, VE2, VE3) zusammengefasst wird und das jeweiligen Regeleinheit (RE1, RE2, RE3) vom jeweiligen Betreiberbereich (TS, DS, LVS) gesteuert wird, und dass ein Austausch von Energiemengen (E) zwischen den Regeleinheiten (RE1, RE2, RE3) über die Schnittstelle zwischen den jeweiligen Regeleinheiten (RE1, RE2, RE3) mittels Steuerung von zwischen den jeweiligen Regeleinheiten (RE1, RE2, RE3) definierten Parametern durch die jeweils zugehörigen Betreiberbereiche (TS, DS, LVS) kontrolliert wird.

2. Verfahren nach Anspruch 1, **dadurch gekennzeichnet, dass** in jedem Betreiberbereich (TS, DS, LVS) sowie in der zugehörigen Regeleinheit (RE1, RE2, RE3) ein vorgegebener Spannungsbereich eingehalten wird.

3. Verfahren nach einem der Ansprüche 1 bis 2, **dadurch gekennzeichnet, dass** bei einer Regelung einer einzelnen Regeleinheit (RE1, RE2, RE3) sowie des zugehörigen Betreiberbereichs (TS, DS, LVS) eine Primärregelung, eine Sekundärregelung und eine Tertiärregelung verwendet werden.

4. Verfahren nach einem der Ansprüche 1 bis 3, **dadurch gekennzeichnet, dass** neben einen Austausch von Energiemengen (E) zwischen den jeweiligen Betreiberbereichen (TS, DS, LVS) weiterhin Betreiberdaten für die Regelung und Steuerung der jeweiligen Regeleinheit (RE1, RE2, RE3) sowie des zugehörigen Betreiberbereichs (TS, DS, LVS) ausgetauscht werden.

5. Verfahren nach einem der Ansprüche 1 bis 4, **dadurch gekennzeichnet, dass** als Parameter zwischen den Betreiberbereichen (TS, DS, LVS) sowie den zugehörigen Regeleinheiten (RE1, RE2, RE3) Wirkleistung (P), Blindleistung (Q) und/oder der so genannte Wirkfaktor Consinus Φ herangezogen werden.

6. Verfahren nach einem der Ansprüche 1 bis 5, **dadurch gekennzeichnet, dass** als erste der drei Versorgungsebenen (VE1, VE2, VE3) einen Hochspannungs-oder Übertragungsebene, dass als zweite der drei Versorgungsebenen (VE1, VE2, VE3) eine Mittelspannungs-oder Verteilungsebene und dass als dritte der drei Versorgungsebenen (VE1, VE2, VE3) eine Niederspannungsebenen vorgesehen wird.

7. Verfahren nach einem der Ansprüche 1 bis 6, **dadurch gekennzeichnet, dass** in der zweiten und dritten Versorgungsebene (VE2, VE3) vom zugehörigen Betreiberbereich (DS, LVS) Schnittstellen zu Teilnehmern (LZ1, LZ2, LZ3, K1, K2, K3) oder Gruppen von Teilnehmern (LZ1, LZ2, LZ3, K1, K2, K3) gesteuert werden, über welche von den Teilnehmern (LZ1, LZ2, LZ3, K1, K2, K3) oder Teilnehmergruppen Energie entnommen und von zumindest einem Teil der Teilnehmer (LZ1, LZ2, LZ3, K1, K2, K3) oder Teilnehmergruppen direkt Energie, insbesondere mittels Photovoltaik und/oder Windkraft, in den jeweiligen Betreiberbereich eingespeist wird.

## Claims

1. Method for operating an entire energy supply network (EV), wherein the energy supply network (VE) has three supply levels (VE1, VE2, VE3), wherein energy is generated and fed into each supply level (VE1, VE2, VE3) by producers (EZ, LZ1, LZ2, LZ3, K1, K2, K3), and wherein each of the three supply levels (VE1, VE2, VE3) is considered as an independent regulating unit (RE1, RE2, RE3) which is connected or disconnected via interfaces between the respective regulating units (RE1, RE2, RE3) as required, **characterised in that** each of the regulating units (RE1, RE2, RE3) is assigned its own operator region (TS, DS, LVS), wherein in the respective operator region (TS, DS, LVS) energy feed-in by generators and energy consumption by consumers of the respective supply level (VE1, VE2, VE3) is combined and the respective regulating unit (RE1, RE2, RE3) controlled by the respective operator region (TS, DS, LVS), and **in that** an exchange of energy amounts (E) between the regulating units (RE1, RE2, RE3) is supervised by the associated operator region (TS, DS, LVS) in each case, via the interface between the respective regulating units (RE1, RE2, RE3), by controlling parameters that are defined between the respective regulating units (RE1, RE2, RE3).

2. Method according to claim 1, **characterised in that** a specified voltage range is maintained in each operator region (TS, DS, LVS) and in the associated regulating unit (RE1, RE2, RE3).

3. Method according to one of claims 1 to 2, **characterised in that** a primary regulation, a secondary regulation and a tertiary regulation are used for the purpose of regulating an individual regulating unit (RE1, RE2, RE3) and the associated operator region (TS, DS, LVS).

4. Method according to one of claims 1 to 3, **characterised in that** in addition to an exchange of energy amounts (E) between the respective operator regions (TS, DS, LVS), operator data for the regulation and control of the respective regulating unit (RE1, RE2, RE3) and the associated operator region (TS, DS, LVS) is also exchanged.

5. Method according to one of claims 1 to 4, **characterised in that** effective power (P), reactive power (Q) and/or the so-called power factor cos Φ are used as parameters between the operator regions (TS, DS, LVS) and the associated regulating units (RE1, RE2, RE3).

6. Method according to one of claims 1 to 5, **characterised in that** a high-voltage or transmission level is provided as first of the three supply levels (VE1, VE2, VE3), a medium-voltage or distribution level is provided as second of the three supply levels (VE1, VE2, VE3), and a low-voltage level is provided as third of the three supply levels (VE1, VE2, VE3).

7. Method according to one of claims 1 to 6, **characterised in that** interfaces to subscribers (LZ1, LZ2, LZ3, K1, K2, K3) or groups of subscribers (LZ1, LZ2, LZ3, K1, K2, K3) at the second and third supply levels (VE2, VE3) are controlled by the associated operator region (DS, LVS), said interfaces being used by the subscribers (LZ1, LZ2, LZ3, K1, K2, K3) or subscriber groups to withdraw energy and by at least some of the subscribers (LZ1, LZ2, LZ3, K1, K2, K3) or subscriber groups to feed energy directly into the respective operator region, particularly by means of photovoltaic systems and/or wind power.

## Revendications

1. Procédé de gestion de l'intégralité d'un réseau de distribution d'énergie (EV), le réseau de distribution d'énergie (VE) présentant trois niveaux de distribution (VE1, VE2, VE3), de l'énergie étant générée et injectée par des producteurs (EZ, LZ1, LZ2, LZ3, K1, K2, K3) à chaque niveau de distribution (VE1, VE2, VE3) et chacun des trois niveaux de distribution (VE1, VE2, VE3) étant considéré comme unité de régulation autonome (RE1, RE2, RE3) qui sont reliées ou séparées, selon les besoins, par l'intermédiaire d'interfaces entre les unités de régulation respectives (RE1, RE2, RE3), **caractérisé en ce qu'**une propre zone de gestionnaire (TS, DS, LVS) est affectée à chacune des unités de régulation (RE1, RE2, RE3), une injection d'énergie par des producteurs et une consommation d'énergie par des consommateurs du niveau de distribution respectif (VE1, VE2, VE3) étant regroupées dans une zone de gestionnaire respective (TS, DS, LVS) et l'unité de régulation respective (RE1, RE2, RE3) étant commandée par la zone de gestionnaire respective (TS, DS, LVS), et **en ce qu'**un échange de quantités d'énergie (E) entre les unités de régulation (RE1, RE2, RE3) vie l'interface entre les unités de régulation respectives (RE1, RE2, RE3) est contrôlé par les zones de gestionnaire (TS, DS, LVS) respectivement associées au moyen d'une commande de paramètres définis entre les unités de régulation respectives (RE1, RE2, RE3).

2. Procédé selon la revendication 1, **caractérisé en ce qu'**une plage de tension donnée est respectée dans chaque zone de gestionnaire (TS, DS, LVS) ainsi que dans l'unité de régulation associée (RE1, RE2, RE3).

3. Procédé selon l'une des revendications 1 à 2, **caractérisé en ce que** sont utilisés, lors d'un réglage d'une unité de régulation individuelle (RE1, RE2, RE3) et de la zone de gestionnaire associée (TS, DS, LVS), un réglage primaire, un réglage secondaire et un réglage tertiaire.

4. Procédé selon l'une des revendications 1 à 3, **caractérisé en ce que** sont échangés, outre l'échange de quantités d'énergie (E) entre les zones de gestionnaire respectives (TS, DS, LVS), des données de gestionnaires pour le réglage et la commande de l'unité de régulation respective (RE1, RE2, RE3) ainsi que de la zone de gestionnaire associée (TS, DS, LVS).

5. Procédé selon l'une des revendications 1 à 4, **caractérisé en ce que** sont utilisés, en tant que paramètres entre les zones de gestionnaire (TS, DS, LVS) et les unités de régulation associées (RE1, RE2, RE3), la puissance active (P), la puissance réactive (Q) et/ou le facteur actif dit Consinus Φ.

6. Procédé selon l'une des revendications 1 à 5, **caractérisé en ce que** sont prévus, en tant que premier des trois niveaux de distribution (VE1, VE2, VE3), un niveau de haute tension ou de transport, en tant que deuxième des trois niveaux de distribution (VE1, VE2, VE3), un niveau de tension moyenne ou de distribution et, en tant que troisième des trois niveaux de distribution (VE1, VE2, VE3), un niveau de basse tension.

7. Procédé selon l'une des revendications 1 à 6, **caractérisé en ce que** sont commandées, dans les deuxième et troisième niveaux de distribution (VE2, VE3) de la zone de gestionnaire associée (DS, LVS), des interfaces vers des usagers (LZ1, LZ2, LZ3, K1, K2, K3) ou des groupes d'usagers (LZ1, LZ2, LZ3, K1, K2, K3) via lesquelles les usagers (LZ1, LZ2, LZ3, K1, K2, K3) ou des groupes d'usagers prélèvent de l'énergie et au moins une partie des usagers (LZ1, LZ2, LZ3, K1, K2, K3) ou groupes d'usagers injectent directement de l'énergie, en particulier au moyen du photovoltaïque et/ou d'énergie éolienne, dans la zone de gestionnaire respective.
